# EUROPÄISCHE PATENTSCHRIFT

(11) **EP 0 449 080 B1**
(45) Veröffentlichungstag und Bekanntmachung des Hinweises auf die Patenterteilung: **06.10.1993**
(21) Anmeldenummer: 91104199.4
(22) Anmeldetag: 19.03.1991
(51) Int. Cl.: B60R 1/06

(54) **Halterung für einen Aussenspiegel für ein Nutzfahrzeug**
External rear view mirror mounting for commercial vehicle
Support pour le rétroviseur extérieur d'un véhicule utilitaire

(30) Priorität: 29.03.1990 DE 4010084
(43) Veröffentlichungstag der Anmeldung: 02.10.1991
(73) Patentinhaber: MEKRA Rangau Plastics GmbH & Co KG, D-90765 Fürth (DE)
(72) Erfinder: Lang, Heinrich, W-8531 Ergersheim (DE); Seiboth, Wolfgang, W-8532 Bad Windsheim (DE)
(74) Vertreter: Rau, Manfred, Dr. Dipl.-Ing.

(56) Entgegenhaltungen:
- DE-A- 2 239 853
- DE-A- 3 628 454
- US-A- 2 856 816

## Beschreibung

Die Erfindung betrifft einen Außenspiegel nach dem Oberbegriff des Anspruches 1 (siehe z.B. DE-A-2 239 853).

Derartige Außenspiegel sind über Haltearme an einem Lagerbock schwenkbar angebracht, der am Führerhaus eines Nutzfahrzeuges angebracht wird. Diese Außenspiegel müssen zum Rangieren oder insbesondere zum Parken des Nutzfahrzeuges oft durch entsprechendes Verschwenken des Haltearms um den Lagerbock verstellt werden. Außerdem müssen sie die Forderung erfüllen, beim Auftreffen des Spiegels auf ein Hindernis vollständig nach vorn oder hinten auszuweichen. Hierbei ist es wiederum von Nachteil, daß exakt definierte Stellungen des Haltearms relativ zum Führerhaus nicht in einfacher Weise wieder herstellbar sind.

Der Erfindung liegt daher die Aufgabe zugrunde, eine Halterung der gattungsgemäßen Art so auszugestalten, daß einerseits ein vollständiges Ausweichen des Spiegels bei dessen Auftreffen auf ein Hindernis sichergestellt ist, wobei andererseits aber definierte Positionen des Haltearms und damit des Spiegels leicht einstellbar sein sollen.

Diese Aufgabe wird erfindungsgemäß durch die Merkmale im Kennzeichnungsteil des Anspruches 1 gelöst. Durch die erfindungsgemäßen Maßnahmen wird erreicht, daß der Haltearm gegenüber dem Lagerbock zwischen zwei definierten Anschlagpositionen nur gegen ein Reibmoment verstellbar ist. Diese beiden Anschlagpositionen können beispielsweise die normale Fahrstellung und eine Parkstellung betreffen, in der der Spiegel schützend in Richtung zum Führerhaus hin verschwenkt wird. Trifft der Spiegel auf ein Hindernis, so kann er unter Lösen der elastischen Rastverbindung über die Anschlagpositionen hinaus verschwenkt werden. Ein Rückschwenken führt dazu, daß die Rastverbindung wieder geschlossen wird, wodurch dann das geschilderte Verschwenken zwischen zwei definierten Anschlagpositionen möglich ist. Wenn in diesem Zusammenhang von Nutzfahrzeugen die Rede ist, dann betrifft dies primär Lastkraftwagen und Omnibusse, aber auch weitere Fahrzeuge.

Durch die Maßnahmen nach Anspruch 2 wird eine einfache lösbare Rastverbindung geschaffen. Die Weiterbildung nach Anspruch 3 gibt an, wie einerseits die definierten Anschlagpositionen geschaffen und andererseits das Lösen der Rastverbindung ermöglicht wird. Anspruch 4 gibt eine konstruktiv einfache Ausgestaltung hierfür an.

Anspruch 5 gibt eine elegante konstruktive Lösung für die Anordnung der Rastverbindung im Lagerbock an.

Durch die Weiterbildung nach Anspruch 6 werden weitere konstruktive Einzelheiten hierzu angegeben.

Durch die Ausgestaltung nach Anspruch 7 werden besonders gute Reibverhältnisse zwischen Haltearm und Lagerbock geschaffen, wobei die weitere Ausgestaltung nach Anspruch 8 angibt, wie das Reibmoment einstellbar ist.

Anspruch 9 gibt weitere Einzelheiten der Ausgestaltung der Rastverbindung an.

Weitere Vorteile, Merkmale und Einzelheiten der Erfindung ergeben sich aus der nachfolgenden Beschreibung eines Ausführungsbeispiels anhand der Zeichnung. Es zeigt
- Fig. 1: eine Draufsicht auf einen Spiegel mit Haltearm und Lagerbock,
- Fig. 2: einen Schnitt durch den Haltearm und den Lagerbock und
- Fig. 3: einen Querschnitt durch den Lagerbock entsprechend der Schnittlinie III-III in Fig. 2.

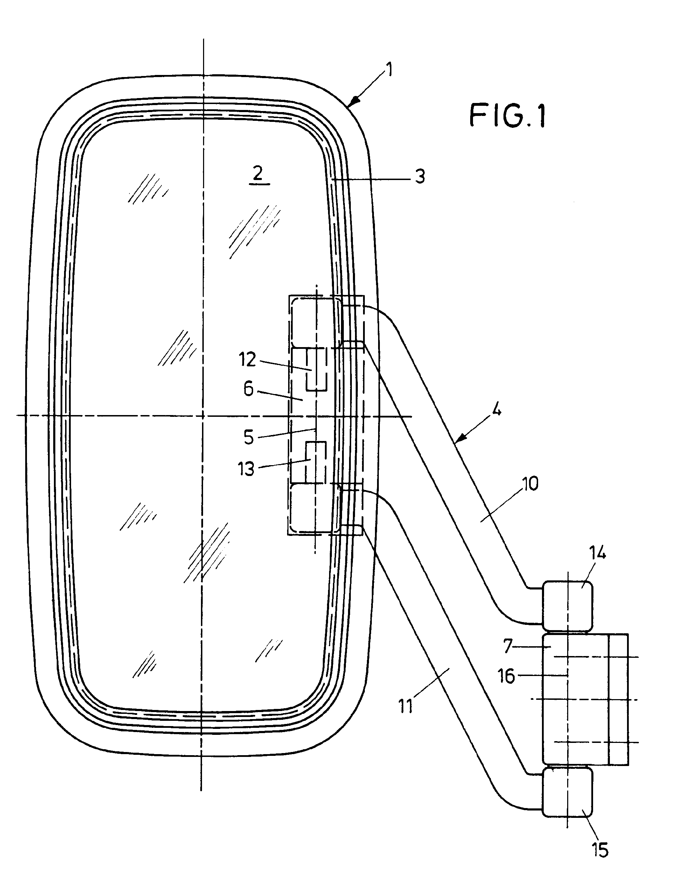

In Fig. 1 ist ein Rückblickspiegel dargestellt, bei dem es sich um einen Außen-Rückblickspiegel für ein Nutzfahrzeug handelt. Dieser weist ein Gehäuse 1 auf, in dem eine Spiegelscheibe 2 mittels eines Halterahmens 3 gehalten ist. Am Gehäuse 1 ist ein doppelarmiger Haltearm 4 um eine Achse 5 schwenkbar mittels eines Klemmstücks 6 angebracht.

An seinem anderen Ende ist der Haltearm 4 an einem Lagerbock 7 schwenkbar angebracht, der wiederum am Führerhaus des Nutzfahrzeuges anbringbar ist. Er liegt mit einer Anlagefläche 8 an dem nicht dargestellten Führerhaus an und wird dort mittels Schrauben befestigt, die in Gewindelöcher 9 des Lagerbocks 7 eingeschraubt werden.

Der doppelarmige Haltearm 4 besteht aus einem oberen Haltearm 1o und einem unteren Haltearm 11, die einander paarweise zugeordnet bzw. zugewandt sind. An ihrem dem Gehäuse 1 zugewandten Ende weisen sie jeweils einen Schwenkzapfen 12,13 auf, die miteinander fluchten und zur Achse 5 konzentrisch sind und die mittels des Klemmstücks 6 am Gehäuse 1 gehalten werden. An ihren am Lagerbock 7 angebrachten Enden sind sie mit Gelenkteilen 14,15 versehen, die am Lagerbock 7 in noch genauer zu beschreibender Weise um eine Schwenkachse 16 schwenkbar angebracht sind. Die Schwenkachse 16 und die Achse 5 verlaufen parallel zueinander, d.h. die beiden Haltearme 1o,11 befinden sich in einer gemeinsamen Ebene, die durch die Achse 5 und die Schwenkachse 16 aufgespannt wird.

Der Lagerbock 7 weist einen konzentrisch zur Schwenkachse 16 verlaufenden zylindrischen Innenraum 17 auf, der zum Gelenkteil 15 des unteren Haltearms 11 durch einen Wandabschnitt 18 des Lagerbocks 7 abgeschlossen ist. Zum Gelenkteil 14 des oberen Haltearms 1o ist dieser Innenraum durch eine Rast-Scheibe 19 abgeschlossen, die gegen einen Ringbund 2o am Innenraum 17 axial in Richtung auf diesen hin festgelegt ist und die mittels einer Nut-Paßfeder-Verbindung 21 relativ zur Schwenkachse 16 drehfest mit dem Lagerbock 7 verbunden ist. Der Innenraum 17 wird konzentrisch zur Schwenkachse 16 von einem Bolzen 22 durchsetzt, der in dem Gelenkteil 14 des oberen Haltearms 1o aufgenommen und mit diesem mittels eines Stiftes 23 relativ zur Schwenkachse 16 drehfest verbunden ist. Der Bolzen 22 durchsetzt den Gelenkteil 15 des unteren Haltearms 11. Dieser Gelenkteil 15 ist mittels einer auf einen Gewindeabschnitt 24 des Bolzens 22 aufgeschraubten Mutter 25 gegen den Lagerbock 7 verspannt. Zwischen dem Gelenkteil 14 und der Rast-Scheibe 19 einerseits und zwischen dem Wandabschnitt 18 und dem unteren Gelenkteil 15 andererseits sind jeweils Reib-Scheiben 26,27 angeordnet, die zur Erzeugung einer ausreichend hohen Reibungskraft zwischen dem Haltearm 4 und dem Lagerbock 7 sorgen. Die Höhe dieser Reibungskraft wird durch entsprechend starkes Anziehen der Mutter 25 auf dem Gewindeabschnitt 24 des Bolzens 22 bestimmt, der mit dem oberen Gelenkteil 14 durch den Stift 23 nicht nur drehfest, sondern auch in Richtung der Schwenkachse 16 fest verbunden ist.

Im Innenraum 17 ist eine den Bolzen 22 umgebende, sich gegen den unteren Wandabschnitt 18 abstützende vorgespannte Schrauben-Druckfeder 28 angeordnet, auf derem dem Wandabschnitt 18 abgewandten Ende eine Stützscheibe 29 angeordnet ist, die im Innenraum 17 und auf dem Bolzen 22 frei verschiebbar ist.

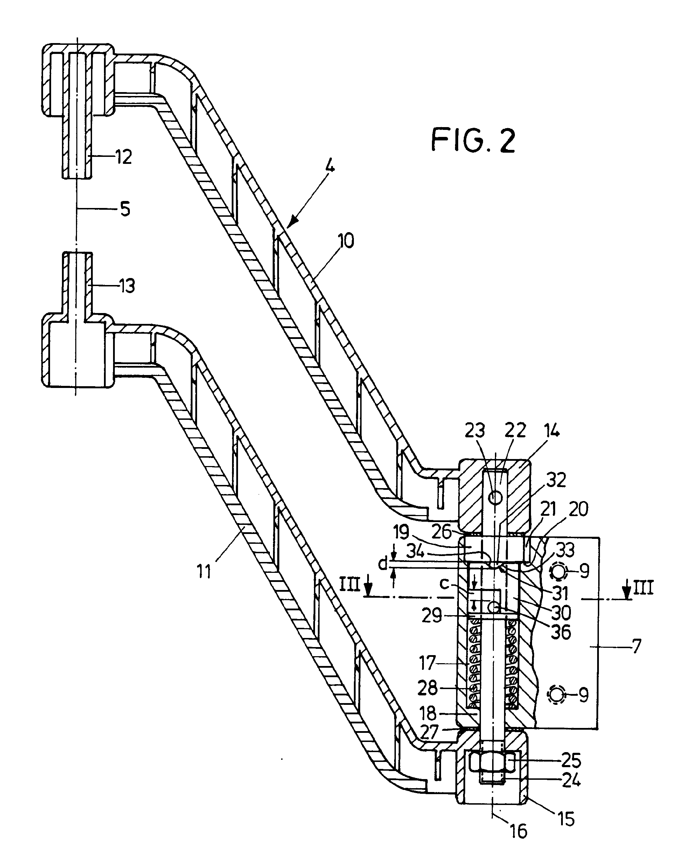

Zwischen der Rast-Scheibe 19 und der Stützscheibe 29 ist auf dem Bolzen 22 eine Rast-Hülse 3o angeordnet, die aufgrund der Vorspannung der Druckfeder 28 fest gegen die Rast-Scheibe 19 gedrückt wird und zwischen dieser und der Stützscheibe 29 gleichsam eingespannt ist. Die Rast-Hülse 3o weist an ihrer der Rast-Scheibe 19 benachbarten Seite eine Rast-Ausnehmung 31 auf, in die ein an der zugewandten Seite der Rast-Scheibe 19 ausgebildeter Rast-Vorsprung 32 hineinragt. Der Vorsprung 32 und die Ausnehmung 31 weisen - wie Fig. 2 erkennen läßt - relativ zur Richtung der Schwenkachse 16 stark geneigte Flanken 33,34 auf, so daß bei einer Verdrehung der Rast-Hülse 3o gegenüber der Rast-Scheibe 19 um die Schwenkachse 16 die Scheibe 19 und die Hülse 3o in Richtung der Schwenkachse 16 auseinandergedrückt werden.

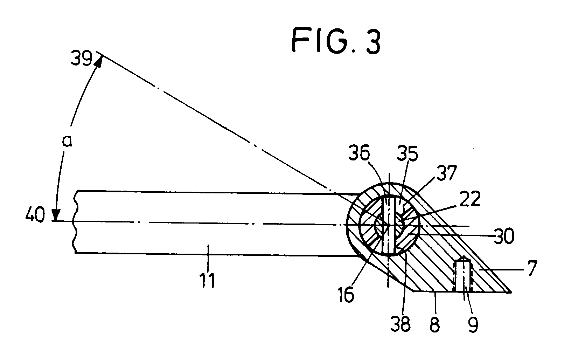

Die Rast-Hülse 3o weist auf ihrer der Stützscheibe 29 benachbarten Seite einen Ausschnitt 35 auf. Dieser Ausschnitt 35 wird von einem Anschlag-Stift 36 durchsetzt, der - wie Fig. 3 erkennen läßt - den Bolzen 22 senkrecht zur Schwenkachse 16 durchsetzt und dessen Länge etwa dem Durchmesser des Innenraums 17 entspricht. Dieser Anschlag-Stift 36 ist also drehfest mit dem Bolzen 22 verbunden, dreht sich also mit diesem bei entsprechenden Verschwenkungen relativ zum Lagerbock 7 um die Schwenkachse 16. Der Ausschnitt 35 ist derart, daß den beiden aus dem Bolzen 22 herausragenden Enden des Anschlag-Stiftes 36 Anschlagflächen 37,38 an der Rast-Hülse 3o zugeordnet sind.

Wie ebenfalls Fig. 3 entnehmbar ist, kann der Haltearm 4 relativ zum Lagerbock 7 um die Schwenkachse 16 um einen Winkel a verschwenkt werden, wobei bei dieser Schwenkbewegung nur das an den Reib-Scheiben 26,27 erzeugte Reibmoment zu überwinden ist. Der Haltearm 4 mit dem Spiegel wird hierbei zwischen zwei definierten Stellungen verschwenkt, in denen entweder die Anschlagfläche 37 oder die Anschlagfläche 38 am Anschlag-Stift 36 anliegt. Diese beiden definierten Relativstellungen des Haltearms 4 mit Spiegel relativ zum Lagerbock 7 und damit zum Führerhaus des Nutzfahrzeugeas können beispielsweise eine Fahrstellung, d.h. die normale Betriebsstellung des Spiegels und die Park- oder Waschstellung definieren, in der der Spiegel teilweise an das Führerhaus herangeschwenkt ist.

Wenn der Haltearm in einer der beiden möglichen Richtungen über diese Anschlagstellung, d.h. über den Winkel a hinaus verschwenkt wird, dann nimmt der an einer der Anschlagflächen 37 oder 38 anliegende Anschlag-Stift die Rast-Hülse 3o mit und verdreht diese relativ zur Rast-Scheibe 19, wodurch der Rast-Vorsprung 32 aus der Rast-Ausnehmung 31 über die Flanken 33 oder 34 herausgedreht wird. Hierbei wird dann die Rast-Hülse 3o gegen die Kraft der Schrauben-Druckfeder 28 in Richtung zur Druckfeder 28 hin verschoben. Eine Verschwenkung des Haltearms zum Führerhaus hin durch die Anlage des Haltearms 4 am Führerhaus begrenzt, ist also nicht spezifisch für die Ausgestaltung des Haltearms 4 mit Lagerbock 7. Der mögliche Hub c der RastHülse 3o auf dem Bolzen 22, also der mögliche Verschiebeweg der Rast-Hülse 3o auf dem Bolzen 22 in Richtung der Schwenkachse 16 ist größer als die Höhe d des Rast-Vorsprungs 32 gegenüber der RastScheibe 19 in Richtung der Schwenkachse 16. Bei der Anlage des als Mitnehmer dienenden Anschlag-Stiftes 36 an der Anschlagfläche 37 nimmt der Haltearm 4 eine definierte Anschlagposition 39 ein, während er bei der Anlage des Anschlag-Stiftes 36 an der Anschlagfläche 38 eine definierte Anschlagposition 4o einnimmt. Die beiden Anschlagpositionen 39,4o definieren zwei Anschlagpositionen, in denen der Haltearm 4 relativ zum Lagerbock 7 spielfrei gehalten wird. In einer Richtung liegt er formschlüssig gegen die entsprechende Anschlagfläche 37,38 an. In der anderen Richtung ist er durch das entsprechende Reibmoment gehalten.

Wie Fig. 2 entnehmbar ist, sind die Haltearme 1o,11 hohl ausgebildet, wobei insbesondere der untere Haltearm 11 so ausgebildet ist, daß durch ihn ein nicht dargestelltes elektrisches Kabel geführt werden kann, das durch den Schwenkzapfen 13 nach außen unsichtbar in das Gehäuse 1 geführt wird.

## Patentansprüche

1. Halterung für einen Außenspiegel für ein Nutzfahrzeug, mit einem Haltearm (4) dessen eines Ende mit einem Spiegel versehen ist und dessen anderes Ende an einem mit dem Nutzfahrzeug verbindbaren Lagerbock (7) um eine Schwenkachse (16) schwenkbar angebracht ist, dadurch gekennzeichnet, daß der Haltearm (4) gegen das Reibmoment einer Reibscheibe (26,27) gegenüber dem Lagerbock (7) zwischen zwei Anschlagpositionen (39,4o) verschwenkbar ist und daß der Haltearm (4) mit dem Lagerbock (7) durch eine gegen die Kraft eines elastichen Elementes (28) wirkende Rastverbindung (31,32) gekoppelt bzw. eingerastet ist und daß der Haltearm (4) über diese Anschlagpositionen (39,4o) hinaus unter Lösen dieser oben genannten elastischen Rastverbindung gegenüber dem Lagerbock (7) verschwenkbar ist.

2. Halterung nach Anspruch 1, dadurch gekennzeichnet, daß die Rastverbindung einen Rast-Vorsprung (32) und eine Rast-Ausnehmung (31) umfaßt, die ineinandergreifen und die an einem gegenüber dem Lagerbock (7) festen Teil (Rast-Scheibe 19) und einem gegenüber dem Lagerbock (7) in Richtung der Schwenkachse (16) gegen die Kraft einer Druckfeder (28) verschiebbaren Teil (Rast-Hülse 3o) ausgebildet ist.

3. Halterung nach Anspruch 2, dadurch gekennzeichnet, daß mit dem Haltearm (4) ein Mitnehmer (Anschlag-Stift 36) drehfest verbunden ist, der zwischen Anschlagflächen (37,38) an dem in Richtung der Schwenkachse (16) verschiebbaren Teil (Rast-Hülse 3o) gegenüber diesem frei verschiebbar ist, wobei jeweils durch Anliegen des Mitnehmers (Anschlag-Stift 36) an einer Anschlagfläche (37,38) eine Anschlagposition (39,4o) gebildet ist.

4. Halterung nach Anspruch 3, dadurch gekennzeichnet, daß das in Richtung der Schwenkachse (16) verschiebbare Teil als Rast-Hülse (3o) ausgebildet ist, die mit einem durch die Anschlagflächen (37,38) begrenzten Ausschnitt (35) versehen ist, in den der Mitnehmer (Anschlag-Stift 36) hineinragt.

5. Halterung nach Anspruch 2, dadurch gekennzeichnet, daß der Lagerbock (7) einen Innenraum (17) aufweist, in dem die Druckfeder (28) und das in Richtung der Schwenkachse (16) verschiebbare Teil (Rast-Hülse 3o) angeordnet sind.

6. Halterung nach Anspruch 2, dadurch gekennzeichnet, daß der Haltearm (4) mit dem Lagerbock (7) mittels eines Bolzens (22) verbunden ist, auf dem das in Richtung der Schwenkachse (16) verschiebbare Teil (Rast-Hülse 3o) angeordnet ist und an dem der Mitnehmer (Anschlag-Stift 36) angebracht ist.

7. Halterung nach Anspruch 1, dadurch gekennzeichnet, daß zwischen dem Haltearm (4) und dem Lagerbock (7) eine Reib-Scheibe (26 bzw. 27) angeordnet ist.

8. Halterung nach den Ansprüchen 6 und 7, dadurch gekennzeichnet, daß das Reibmoment zwischen Haltearm (4) und Lagerbock (7) mittels des Bolzens (22) einstellbar ist.

9. Halterung nach Anspruch 2, dadurch gekennzeichnet, daß das gegenüber dem Lagerbock (7) feste Teil als Rast-Scheibe (19) ausgebildet ist.

10. Halterung nach Anspruch 1, dadurch gekennzeichnet, daß der Haltearm (4) als doppelarmiger Haltearm ausgebildet ist, der mit Gelenkteilen (14,15) den Lagerbock (7) umgreift.

11. Halterung nach Anspruch 6 und 1o, dadurch gekennzeichnet, daß der Bolzen (22) mit einem Gelenkteil (14) fest verbunden ist und daß das andere Gelenkteil (15) mittels einer Mutter (25) gegenüber dem Lagerbock (7) verspannt ist.

## Claims

1. A holding device for an external rear-view mirror for a commercial vehicle with a support arm (4), of which one end is provided with a mirror and of which the other end is arranged on a pillow block (7), which can be connected with the commercial vehicle, in a manner pivotable about a pivot axis (16), characterized in that the support arm (4) is pivotable against the friction moment of a friction disk (26, 27) relative to the pillow block (7) between two stop positions (39, 40), and in that the support arm (4) is coupled or locked, respectively, with the pillow block (7) by a locking connection (31, 32) acting against the force of an elastic element (28), and in that the support arm (4) is pivotable relative to the pillow block (7) beyond these stop positions (39, 40) upon release of this above-mentioned elastic locking connection.

2. A holding device according to claim 1, characterized in that the locking connection comprises a locking nose (32) and a locking recess (31) engaging with one another and formed on a component part (locking disk 19) stationary relative to the pillow block (7) and on a component part (locking sleeve 30) displaceable relative to the pillow block (7) in the direction of the pivot axis (16) against the force of a compression spring (28).

3. A holding device according to claim 2, characterized in that a driver (stop pin 36) is connected with the support arm (4) in a non-rotatable manner, which driver is freely displaceable between the stop surfaces (37, 38) on the component part (locking sleeve 30) displaceable in the direction of the pivot axis (16) and relative to it, a stop position (39, 40) being formed by the driver (stop pin 36) bearing against a stop surface (37, 38).

4. A holding device according to claim 3, characterized in that the component part displaceable in the direction of the pivot axis (16) is in the form of a locking sleeve (30), which is provided with a cut-out (35) defined by the stop surfaces (37, 38), into which cut-out (35) the driver (stop pin 36) projects.

5. A holding device according to claim 2, characterized in that the pillow block (7) has an inner chamber (17), in which the compression spring (28) and the component part (locking sleeve 30) displaceable in the direction of the pivot axis (16) are arranged.

6. A holding device according to claim 2, characterized in that the support arm (4) is connected with the pillow block (7) by means of a bolt (22), on which the part (locking sleeve 30) displaceable in the direction of the pivot axis (16) is arranged and on which the driver (stop pin 36) is arranged.

7. A holding device according to claim 1, characterized in that a friction disk (26 or 27, respectively) is arranged between the support arm (4) and the pillow block (7).

8. A holding device according to claims 6 and 7, characterized in that the friction moment between the support arm (4) and the pillowblock (7) can be adjusted by means of the bolt (22).

9. A holding device according to claim 2, characterized in that the component part stationary relative to the pillow block (7) is in the form of a locking disk (19).

10. A holding device according to claim 1, characterized in that the support arm (4) is in the form of a double-armed support arm surrounding the pillow block (7) with joints (14, 15).

11. A holding device according to claims 6 and 10, characterized in that the bolt (22) is firmly connected with a joint (14) and that the other joint (15) is braced relative to the pillow block (7) by means of a nut (25).

## Revendications

1. Support pour le rétroviseur extérieur d'un véhicule utilitaire, comportant un bras porteur (4) dont l'une des extrémités est munie d'un rétroviseur et dont l'autre extrémité est montée à pivot autour d'un axe de pivotement (16) sur un chevalet d'appui (7) disposé sur le véhicule utilitaire, caractérisé en ce que le bras porteur (4) peut être déplacé par pivotement par rapport au chevalet d'appui (7) contre le couple de frottement d'un disque de friction (26,27) entre deux positions d'arrêt (39,40), en ce que le bras porteur (4) peut être accouplé ou enclenché avec le chevalet d'appui (7) par une liaison par cran (31,32) agissant contre la force d'un élément élastique (28) et en ce que le bras porteur (4) peut être déplacé par pivotement par rapport au chevalet d'appui (7) au-delà de ces positions d'arrêt (39,40) par suppression de la liaison élastique par cran mentionnée plus haut.

2. Support selon la revendication 1, caractérisé en ce que la liaison par cran comporte une saillie d'engrènement (32) et un évidement formant cran (31) engrenant entre eux et réalisés sur une partie (disque d'engrènement 19), fixe par rapport au chevalet d'appui (7) et une partie (douille d'engrènement 30) mobile dans la direction de l'axe de pivotement (16) par rapport au chevalet d'appui (7) contre la force d'un ressort de compression (28).

3. Support selon la revendication 2, caractérisé en ce qu'un organe de retenue (goupille d'arrêt 36) est assemblé solidairement en rotation avec le bras porteur (4), cet organe pouvant se déplacer librement entre des surfaces d'arrêt (37,38) formées sur la partie (douille d'engrènement 30) mobile dans la direction de l'axe de pivotement (16), une position d'arrêt (39,40) étant respectivement déterminée par butée de l'organe de retenue (goupille d'arrêt 36) sur l'une des surfaces d'arrêt (37,38).

4. Support selon la revendication 3, caractérisé en ce que la partie mobile dans la direction de l'axe de pivotement (16) est constituée sous forme de douille d'engrènement (30) présentant une entaille (35) limitée par les surfaces d'arrêt (37,38), l'organe de retenue (goupille d'arrêt 36) pénétrant dans cette entaille.

5. Support selon la revendication 2, caractérisé en ce que le chevalet d'appui présente un volume intérieur (17) dans lequel sont disposés le ressort de compression (28) et la partie (douille d'engrènement 30) mobile dans la direction de l'axe de pivotement (16).

6. Support selon la revendication 2, caractérisé en ce que le bras porteur (4) est assemblé avec le chevalet d'appui (7) au moyen d'une cheville (22) sur laquelle est disposée la partie (douille d'engrènement 30) mobile dans la direction de l'axe de pivotement (16) et dans laquelle est engagée l'organe de retenue (goupille d'arrêt 36).

7. Support selon la revendication 1, caractérisé en ce qu'un disque de friction (26,37) est disposé entre le bras porteur (4) et le chevalet d'appui (7).

8. Support selon les revendications 6 et 7, caractérisé en ce que le couple de frottement développé entre le bras porteur (4) et le chevalet d'appui (7) est réglable au moyen de la cheville (22).

9. Support selon la revendication 2, caractérisé en ce que la partie fixe par rapport au chevalet d'appui (7) est constituée sous forme de disque d'engrènement (19).

10. Support selon la revendication 1, caractérisé en ce que le bras porteur (4) est constitué sous forme de bras porteur à deux bras élémentaires, ce bras chevauchant le chevalet d'appui (7) par deux parties d'articulation (14,15).

11. Support selon les revendications 6 et 10, caractérisé en ce que la cheville (22) est assemblée rigidement avec une partie d'articulation (14) et en ce que l'autre partie d'articulation (15) est serrée contre le chevalet d'appui (7) au moyen d'un écrou (25).
